# EUROPEAN PATENT APPLICATION

(11) **EP 4 113 213 A1**
(43) Date of publication of application: **04.01.2023**
(21) Application number: 20921209.1
(22) Date of filing: 28.12.2020
(51) Int. Cl.: G03G 21/00, B41J 29/42, G06F 3/0482, G06F 3/0488

(54) **CONTROL DEVICE AND CONTROL PROGRAM**

(30) Priority: 27.02.2020 JP 2020031203
(71) Applicant: FUJIFILM Corporation, Tokyo 106-8620 (JP)
(72) Inventor: SEKINE, Yoshihiro, Ashigarakami-gun, Kanagawa 258-8538 (JP); MISHIMA, Yu, Ashigarakami-gun, Kanagawa 258-8538 (JP); SHIMIZU, Yuki, Ashigarakami-gun, Kanagawa 258-8538 (JP)
(74) Representative: Parker, Andrew James
(86) International application number: PCT/JP2020/049159
(87) International publication number: WO 2021/171780

(57) **Abstract**

A control device includes a display control unit that controls display of a function selection screen including a plurality of sections in which images for selection of functions to be executed by an information apparatus are arranged, in which, in a case in which a selection operation of selecting an empty section in which no image is arranged has been performed in a customization mode in which image arrangement is changeable, the display control unit causes display of a list of images, each of which is arrangeable in the empty section, and, in a case in which a selection operation of selecting an image from the list has been performed, arranges a selected image in the empty section.

## Description

### Technical Field

The technology of the present disclosure relates to a control device and a control program.

### Background Art

As an information apparatus, a so-called multi-function peripheral that executes a plurality of functions such as a copy function, a scanning function, a facsimile function, and a printing function is known. A function selection screen on which an image such as an icon for selection of a function to be executed by an information apparatus such as a multi-function peripheral is arranged is displayed on a display screen of the information apparatus.

The operability of the information apparatus is greatly affected by the type of an image and an order in which images are displayed and/or positions at which images are displayed in such a function selection screen. For example, an image indicating a function that is generally considered to be frequently used at the time of shipping from a manufacturer is displayed in the function selection screen of the information apparatus.

However, a used function and use frequency are different for each user, and it is necessary to customize the function selection screen in order to efficiently use the information apparatus. The customization should be done simply and quickly. It is not preferable that the position of an image that is already displayed is changed when a new image is added, because such a change causes an erroneous operation.

In order to respond to such a request, there is a technology disclosed in Japanese Patent Application Laid-Open (JP-A) No. 2005-321915, in which a new image can be added and displayed, and the position of an image that is already arranged is not changed.

### SUMMARY OF INVENTION

### Technical Problem

The technology disclosed in JP-A No. 2005-321915 includes recognition means that recognizes whether or not arrangement of an icon is designated for each of a plurality of slots (corresponding to "sections" in the present application) provided as regions where the icon can be arranged. In the disclosed technology, a predetermined icon is arranged in a slot for which designation of arrangement of the predetermined icon has been recognized by the recognition means among the plurality of slots, a predetermined symbol indicating that the arrangement of the icon is not designated is arranged in other slots. In a case where it is recognized again that arrangement of a new icon is designated for a slot, a new icon is arranged in the slot, and the same predetermined icon or predetermined symbol as before is arranged in other slots. However, this disclosed technology does not show specific means for adding a new icon.

Japanese Patent Application Laid-Open (JP-A) No. 2017-4042 discloses a technology for displaying, when an icon to be displayed in a function selection screen is added, the added icon in a menu screen. However, in this disclosed technology, a position at which the added icon is displayed is not proposed.

An object of the technology of the disclosure is to provide a control device and a control program that make it easy to select an image to be added to an empty section in which no image is arranged in a function selection screen including a plurality of sections in which images for selection of functions to be executed by an information apparatus are arranged, and make it possible to add an image to an empty section without changing a position of an image that is already arranged in a section.

### Solution to Problem

A first aspect is a control device including a display control unit that controls display of a function selection screen including a plurality of sections in which images for selection of functions to be executed by an information apparatus are arranged, in which, in a case in which a selection operation of selecting an empty section in which no image is arranged has been performed in a customization mode in which image arrangement is changeable, the display control unit causes display of a list of images, each of which is arrangeable in the empty section, and, in a case in which a selection operation of selecting an image from the list has been performed, arranges a selected image in the empty section.

A second aspect is the control device according to the first aspect, in which the display control unit causes display, in the empty section, of a list display button for displaying the list of images, each of which is arrangeable in the empty section.

A third aspect is the control device according to the first or second aspect, in which the display control unit causes display of a cancel button for canceling arrangement of an image arranged in the section in the customization mode, and the arrangement of the image in the section is canceled by operating the cancel button.

A fourth aspect is the control device according to any one of the first to third aspects, in which the display control unit causes display of a guide frame indicating a section in which an image is arranged in the customization mode.

A fifth aspect is the control device according to any one of the first to fourth aspects, in which the display control unit causes a reduction in a size of a display region of the image and simultaneously causes display of both the display region reduced in size and a display region other than the display region reduced in size.

A sixth aspect is the control device according to the fifth aspect, in which the display control unit causes display of some of a plurality of images arranged in respective sections in the display region reduced in size.

A seventh aspect is a control program for causing a computer to function as a control device comprising a display control unit that controls display of a function selection screen comprising a plurality of sections in which images for selection of functions to be executed by an information apparatus are arranged, wherein, in a case in which a selection operation of selecting an empty section in which no image is arranged has been performed in a customization mode in which image arrangement is changeable, the display control unit causes display of a list of images, each of which is arrangeable in the empty section, and, in a case in which a selection operation of selecting an image from the list has been performed, arranges a selected image in the empty section.

### Advantageous Effects of Invention

According to the technology of the disclosure, it is easy to select an image to be added to an empty section in which no image is arranged in a function selection screen including a plurality of sections in which images for selection of functions to be executed by an information apparatus are arranged, and it is possible to add an image to an empty section without changing a position of an image that is already arranged in a section.

### BRIEF DESCRIPTION OF DRAWINGS

Fig. 1 is an exterior view of a multi-function peripheral.
Fig. 2 is a block diagram illustrating a hardware configuration of the multi-function peripheral.
Fig. 3 is a block diagram illustrating a functional configuration of a control device.
Fig. 4 is a view illustrating an item selection screen.
Fig. 5 is a view illustrating an execution screen.
Fig. 6 is a view illustrating a function selection screen.
Fig. 7 is a view illustrating the function selection screen in a customization mode.
Fig. 8 is a block diagram illustrating section information and icon information recorded in a storage device.
Fig. 9 is a view illustrating a state in which an icon list is displayed in the function selection screen in the customization mode.
Fig. 10 is a view illustrating a state in which an operation of moving an icon to an empty section is performed in the function selection screen in the customization mode.
Fig. 11 is a view illustrating a state in which an icon is moved to an empty section in the function selection screen in the customization mode.
Fig. 12 is a flowchart illustrating a flow of display control processing in the customization mode.

### DESCRIPTION OF EMBODIMENTS

Hereinafter, an example of an embodiment of the technology of the present disclosure will be described with reference to the drawings.

### (Multi-Function Peripheral 100)

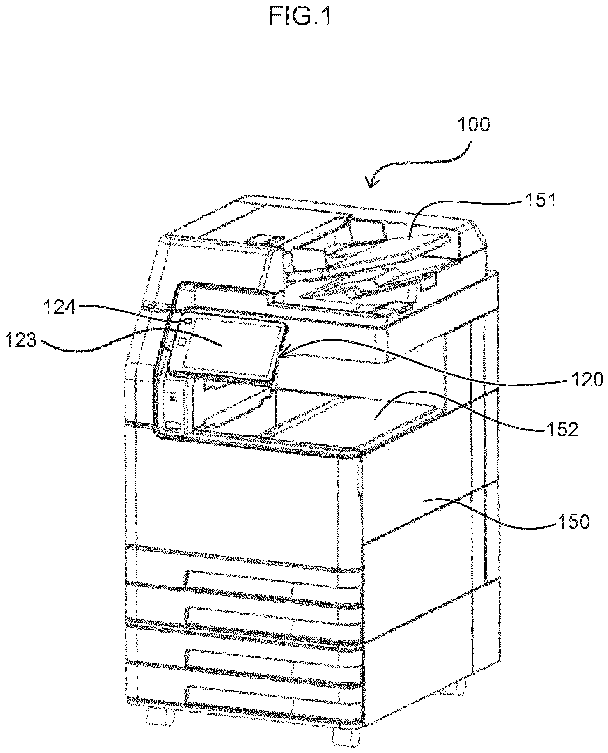

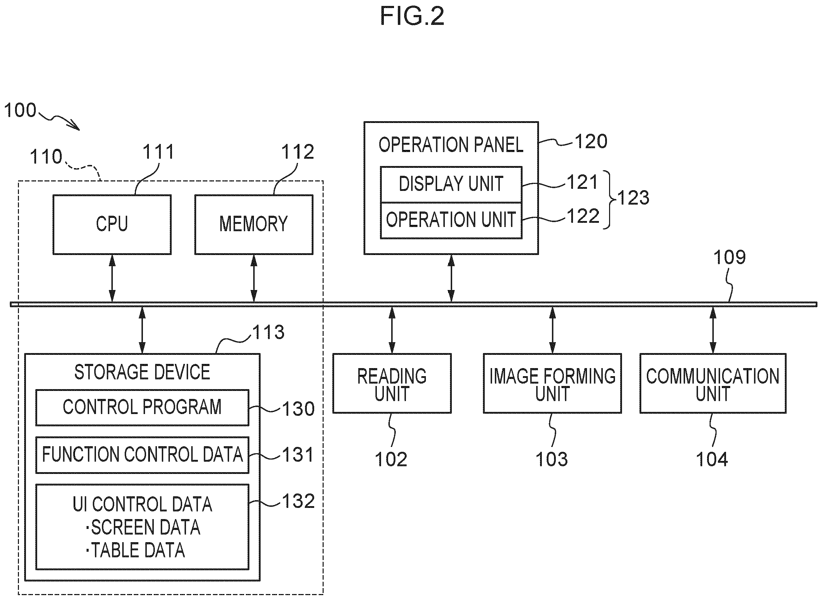

Fig. 1 is a view illustrating an appearance of the multi-function peripheral 100 according to the present embodiment. Fig. 2 is a block diagram illustrating a hardware configuration of the multi-function peripheral 100.

The multi-function peripheral 100 illustrated in Figs. 1 and 2 is a device capable of executing processing for functions such as copying, printing, scanning, and facsimile. As illustrated in Fig. 2, the multi-function peripheral 100 includes a control device 110, a reading unit 102, an image forming unit 103, and a communication unit 104 in a main body 150. Note that the multi-function peripheral 100 is an example of the information apparatus. The multi-function peripheral 100 can perform data communication with an information processing apparatus such as a personal computer or a server in an office connected to a local area network (LAN) line or the like or perform facsimile communication with a communication apparatus in another office through a public line such as a telephone line. Therefore, the multi-function peripheral 100 is also an example of the information communication apparatus.

An operation panel 120, the control device 110 including a storage device 113, the reading unit 102, the image forming unit 103, and the communication unit 104 are mutually connected by a bus 109. Each unit of the multi-function peripheral 100 will be described below.

### (Reading Unit 102, Image Forming Unit 103, and Communication Unit 104)

The reading unit 102 reads an image of a document. Specifically, the reading unit 102 generates image data by optically reading an image of a document and converting the image into a digital signal.

The image forming unit 103 forms an image on a medium such as a paper sheet. Specifically, the image forming unit 103 forms an image on a medium by, for example, an electrophotographic method in which an image is formed by electrostatically attaching a toner onto a paper sheet. Note that the image forming unit 103 may form an image on a medium by another method such as an inkjet method in which an image is formed by ejecting an ink onto a paper sheet.

The communication unit 104 communicates with an external device such as another facsimile device. Specifically, the communication unit 104 transmits and receives various pieces of data to and from an external device by communication using various wired or wireless communication lines. Examples of the communication line include the Internet, an intranet, and a public telephone line.

For example, the multi-function peripheral 100 includes a document feeding device 151 provided at an upper portion of the main body 150 as illustrated in Fig. 1. The document feeding device 151 feeds a document to a document reading stage (not illustrated) disposed on an upper surface of the main body 150. The reading unit 102 is disposed at a position facing the reading stage in the main body 150. The document feeding device 151 can be lifted up. As the document feeding device 151 is lifted up, the reading stage is exposed and can be used as a so-called flatbed type. Therefore, a user can directly set a document on the reading stage without using the document feeding device 151.

An image of a document is read by the reading unit 102, and image data is generated. In a case where processing related to the copy function is executed in the multi-function peripheral 100, the image forming unit 103 prints an image of a document on another paper sheet based on image data generated by the reading unit 102. The paper sheet on which an image is printed is discharged to a paper sheet discharging unit 152 provided in the main body 150. In a case where processing related to the facsimile function is executed in the multi-function peripheral 100, image data generated by the reading unit 102 is output to the communication unit 104 and transmitted to a destination via the communication unit 104. In a case where processing related to the printing function is executed in the multi-function peripheral 100, the image forming unit 103 prints an image on a paper sheet based on image data input from a personal computer or the like. The paper sheet on which an image is printed is discharged to the paper sheet discharging unit 152.

In addition, a feeding unit in which a paper sheet is loaded, a paper sheet transport mechanism that transports a paper sheet to the image forming unit 103 and the paper sheet discharging unit 152, and the like are provided inside the main body 150.

### (Operation Panel 120)

The multi-function peripheral 100 includes the operation panel 120 for a user to operate the multi-function peripheral 100. The operation panel 120 is an example of a user interface. The user interface is a device for exchanging information between the multi-function peripheral 100 and a user, specifically, for inputting an operation instruction from a user to the multi-function peripheral 100 or displaying information such as a status of the multi-function peripheral 100 to a user.

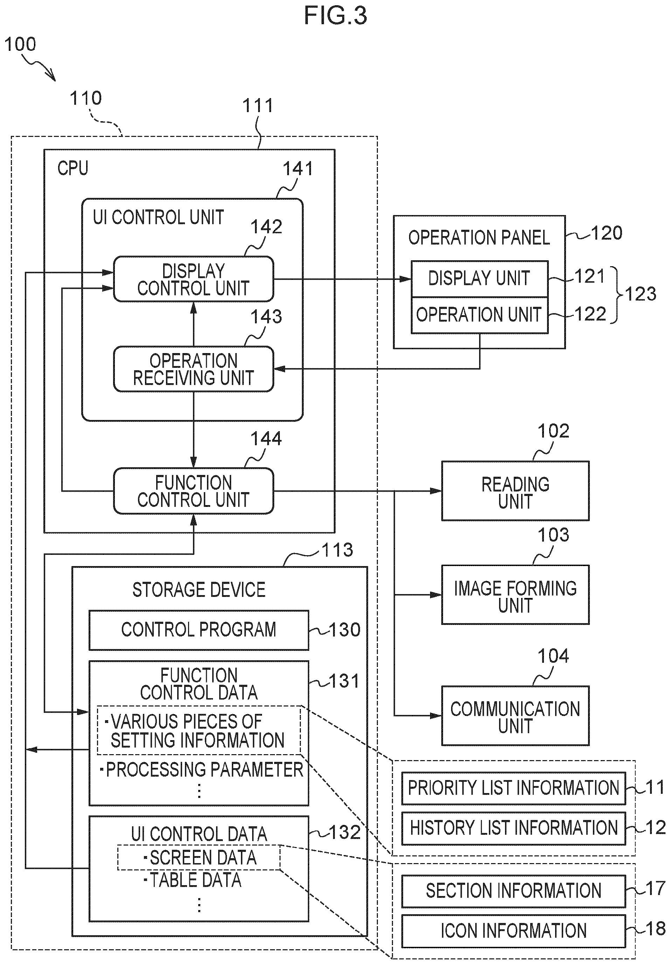

In the present embodiment, specifically, the operation panel 120 includes a display unit 121 and an operation unit 122 as illustrated in Figs. 2 and 3.

The display unit 121 displays an operation screen, various messages such as operation guidance, and the like. The operation unit 122 is a component on which a user performs an input operation. The display unit 121 is implemented by, for example, a liquid crystal display, an organic electro luminescence (EL) display, or the like. The operation unit 122 and the display unit 121 are implemented by a touch panel display 123 in which both the operation unit 122 and the display unit 121 are integrated. The operation unit 122 is a resistive type touch panel, a capacitive type touch panel, or the like, and detects a touch operation of a user. A region where an operation screen of the display unit 121 is displayed and a region where a touch operation of the operation unit 122 can be detected overlap with each other in the touch panel display 123. As a result, once a user performs a touch operation on an operation screen displayed on the display unit 121, the operation unit 122 detects the touch operation performed on the operation screen and a position at which the touch operation is performed on the operation screen, and outputs a detection signal to the control device 110.

Examples of the touch operation of the user include operations such as tapping, flicking, sliding, and dragging. The tapping operation is an operation of touching the screen of the display unit 121 with a finger. The flicking operation is an operation of touching the screen of the display unit 121 in such a way as to flick the screen with a finger. The sliding operation is an operation of moving a finger in a state of touching the screen of the display unit 121 with the finger. The dragging operation is an operation for moving an image such as an icon displayed on the display unit 121. The dragging operation is an operation of touching an image displayed on the display unit 121 with a finger, then moving the finger touching the image, and then releasing the finger from the image. The operation unit 122 that is a touch panel outputs, as a detection signal, a movement locus of a finger associated with these touch operations in an operation screen. Note that the touch operation may be not only an operation using a finger of a user but also an operation using a tool such as a touch pen.

The operation panel 120 further includes an operation key 124 disposed outside the screen of the display unit 121 as illustrated in Fig. 1. Examples of the operation key 124 include a power key for supplying power to the multi-function peripheral 100, a cancel key for canceling various executions, and the like. As described above, the operation panel 120 according to the present embodiment includes a mechanical operation unit in addition to the touch panel display 123 including the operation unit 122.

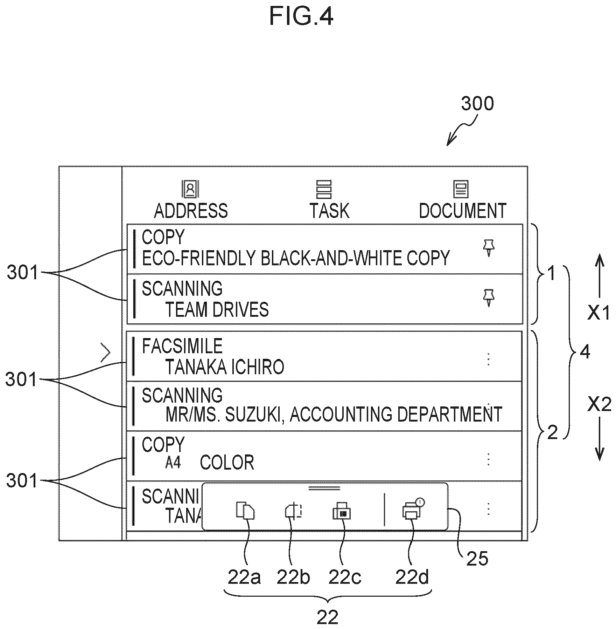

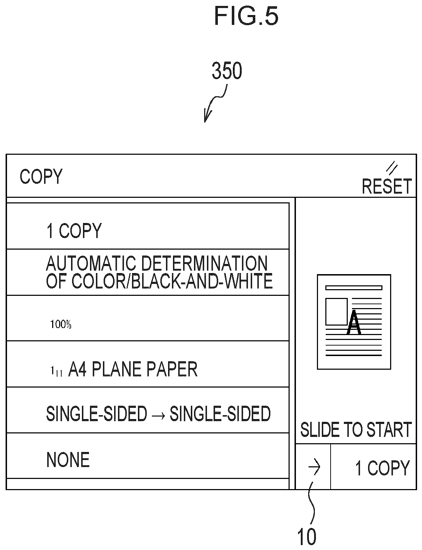

In the present embodiment, the display unit 121 can display various operation screens such as an item selection screen 300 illustrated in Fig. 4 and an execution screen 350 illustrated in Fig. 5, for example. Details of the item selection screen 300 and the execution screen 350 will be described later.

### (Control Device 110)

The control device 110 is a device that controls each unit of the multi-function peripheral 100 including the operation panel 120. Specifically, the control device 110 includes a central processing unit (CPU) 111, a memory 112, and a storage device 113 as illustrated in Fig. 2. The control device 110 controls the multi-function peripheral 100 based on information stored in the storage device 113.

The storage device 113 stores various programs including a control program 130 and various pieces of data including function control data 131 and user interface (UI) control data 132. The control program 130 is a program that causes a computer including the CPU 111 to function as the control device 110. The function control data 131 is data used to control the reading unit 102, the image forming unit 103, and the communication unit 104, and includes various pieces of setting information, processing parameters, and the like. The processing parameter is, for example, a parameter used when image correction processing such as gain correction, contrast correction, white balance correction, or gamma correction is executed.

The various pieces of setting information include setting information that specifies processing conditions for each of the copy function, the scanning function, the printing function, and the like implemented by the reading unit 102, the image forming unit 103, and the communication unit 104. For example, in the case of the copy function and the printing function, the setting information is setting information that specifies processing conditions such as paper sheet size setting and color setting (for example, black-and-white copy or color copy), and in the case of the scanning function, the setting information is setting information that specifies processing conditions such as reading resolution setting and color setting (for example, black-and-white reading or color reading). The setting information includes user setting information set by a user in addition to initial setting information. The various pieces of setting information also include a history of user setting information used by a user in the past.

The UI control data 132 includes various pieces of screen data for configuring an operation screen displayed by the display unit 121 and various pieces of table data defining various setting items and the like displayed in an operation screen. Specifically, the storage device 113 is implemented by a recording device such as a hard disk drive (HDD), a solid state drive (SSD), or a flash memory.

The memory 112 is a work area for the CPU 111 to execute various programs, and temporarily records various programs or various pieces of data when the CPU 111 executes processing. The CPU 111 reads various programs including the control program 130 from the storage device 113 to the memory 112, and executes the program by using the memory 112 as a work area.

In the control device 110, the CPU 111 executes the control program 130 to implement various functions for controlling the multi-function peripheral 100. Hereinafter, a functional configuration implemented by cooperation of the CPU 111 as a hardware resource and the control program 130 as a software resource will be described. Fig. 3 is a block diagram illustrating a functional configuration of the CPU 111, and is a block diagram mainly illustrating a functional configuration that implements control of the operation panel 120.

As illustrated in Fig. 3, in the control device 110, the CPU 111 functions as a UI control unit 141 and a function control unit 144 by executing the control program 130.

The function control unit 144 controls the reading unit 102, the image forming unit 103, and the communication unit 104 while referring to the function control data based on an operation instruction input from the UI control unit 141. In addition, the function control unit 144 outputs, to the UI control unit 141, a processing execution result in the reading unit 102, the image forming unit 103, and the communication unit 104, a status, and the like.

The UI control unit 141 receives an operation instruction input from the operation panel 120 and outputs the received operation instruction to the function control unit 144. The UI control unit 141 controls the touch panel display 123. The UI control unit 141 includes a display control unit 142 and an operation receiving unit 143 as the functional configuration.

The operation receiving unit 143 receives an operation instruction according to a user's operation input from the operation panel 120, the user's operation input including a user's touch operation detected by the operation unit 122 of the touch panel display 123.

The display control unit 142 performs control to display various operation screens on the display unit 121 of the touch panel display 123 with reference to the function control data 131 and the UI control data 132.

Specifically, once the operation receiving unit 143 receives an operation of supplying power to the multi-function peripheral 100, the display control unit 142 causes the display unit 121 to display the item selection screen 300 (see Fig. 4) as a top screen, as an example. The item selection screen 300 is a screen in which the item list 4 including a plurality of task items 301 (see Fig. 4) selected by a user is displayed in a scrollable manner. A user selects and operates a task item 301 to be executed by the multi-function peripheral 100 in the item selection screen 300. Here, a task is processing executed by the multi-function peripheral 100 after a user sets a processing condition for a main function of the multi-function peripheral 100. Then, an item including information indicating the content of this processing is referred to as the task item 301. For example, in the case of the copy function, which is one of the main functions of the multi-function peripheral 100, processing executed by the multi-function peripheral 100 after a user sets the processing conditions such as paper sheet size setting and color setting is the task of the copy function, and an item indicating the content of the task is the task item 301. Similarly, in the case of the scanning function, processing executed by the multi-function peripheral 100 after a user sets the processing conditions such as reading resolution setting and color setting is the task of the scanning function, and an item indicating the content of the task is the task item 301.

As described above, there are various types of tasks and task items 301 indicating the contents of the tasks according to the type of function and the processing condition. A plurality of task items 301 for different types of functions and different processing conditions are displayed in the item selection screen 300.

Various pieces of setting information of the function control data 131 include priority list information 11 and history list information 12. The priority list information 11 is information in which a plurality of preset task items 301 are recorded. The task items 301 included in the priority list information 11 include, for example, task items that are preset due to a high execution frequency. The task items 301 included in the priority list information 11 may be initially set at the time of product shipment or may be set by a user.

The history list information 12 is information in which histories of the task items 301 executed in the past by the multi-function peripheral 100 are recorded. The name of each task item 301, an arrangement order, and the like are recorded in the priority list information 11. The name of each task item 301, an execution date and time when each task item 301 was executed, and the like are recorded in the history list information 12.

The display control unit 142 generates a priority list 1 (see Fig. 4) and a history list 2 (see Fig. 4) with reference to the priority list information 11 and the history list information 12. Specifically, when generating the priority list 1, the display control unit 142 generates the priority list 1 by arranging the task items 301 of the priority list 1 in order based on the name and the arrangement order of each task item 301 included in the priority list information 11. When generating the history list 2, the display control unit 142 generates the history list 2 by arranging the task items 301 of the history list 2 in order based on the name and the execution date and time of each task item 301 included in the history list information 12. The display control unit 142 displays the priority list 1 and the history list 2 in parallel as the item list 4 in the item selection screen 300.

As a result, as illustrated in Fig. 4, the display control unit 142 displays the priority list 1 that is a list of preset task items 301, and the history list 2 that includes histories of task items 301 executed in the past in the multi-function peripheral 100, in parallel in the item selection screen 300. In Fig. 4, as an example, the priority list 1 is displayed above the history list 2 in the item selection screen 300.

The task items 301 of the history list 2 are displayed in time series based on the execution date and time of each task item 301 recorded in the history list information 12. Specifically, as an example, the task items 301 are displayed in a direction along an arrow X2 in order from a task item 301 with the latest execution date and time. Therefore, the most recently executed task item 301 is displayed at the uppermost portion of the history list 2 (that is, a position closest to an X1 direction side).

The function control unit 144 adds data of an executed task item 301 to the history list information 12 every time a task item 301 is executed by the multi-function peripheral 100. In a case where the history list information 12 is updated, the display control unit 142 updates the history list 2 in the item selection screen 300.

For example, once the operation unit 122 detects a selection operation (specifically, a flicking operation or a tapping operation) for a task item 301 in the priority list 1 and the history list 2, the operation receiving unit 143 receives an operation instruction for the selection operation for the task item 301. In a case where the operation receiving unit 143 receives the operation instruction, the display control unit 142 causes the display unit 121 to display the execution screen 350 (see Fig. 5) for executing the selected task. Setting items for performing various settings and an execution button 10 for executing a task are displayed in the execution screen 350. Various settings are made by operating the setting items, and then a task is executed by operating the execution button 10.

As illustrated in Fig. 4, a display region 25 in which icons 22 are displayed is further arranged at the lower end of the item list 4 in the item selection screen 300 according to the present embodiment. Specifically, the display region 25 is arranged while being superimposed on a task item 301 at the lower end of the history list 2. An icon 22 functions as a selection button for a user to select a function to be executed by the multi-function peripheral 100. An icon 22 is an example of an image for selection of a function to be executed by the multi-function peripheral 100, which is an example of the information apparatus.

Fig. 4 illustrates icons 22a, 22b, 22c, and 22d as the icons 22. These icons correspond to the copy function, the scanning function, the facsimile function, and the printing function, which are the four main functions of the multi-function peripheral 100. The icon 22a is a selection button for selecting the copy function, and the icon 22b is a selection button for selecting the scanning function. The icon 22c is a selection button for selecting the facsimile function, and the icon 22d is a selection button for selecting the printing function. As described later, the icons 22 include various icons in addition to the four icons 22a, 22b, 22c, and 22d. Hereinafter, in a case where there is no need to distinguish the types of the icons 22, the four icons 22a, 22b, 22c, and 22d are simply referred to as the icons 22.

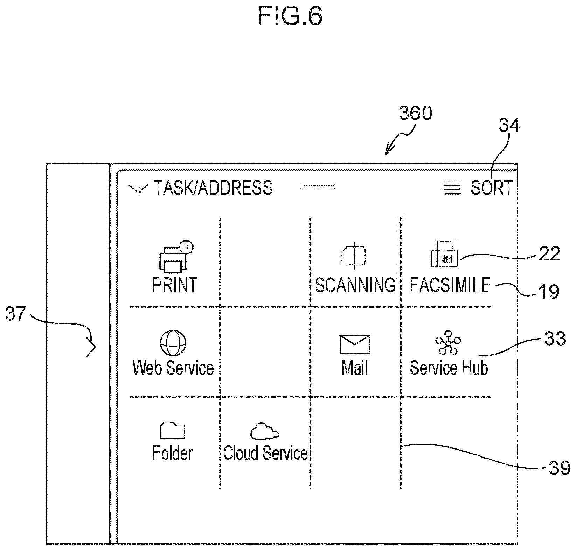

The display control unit 142 displays a function selection screen 360 (see Fig. 6) by a predetermined operation for the display region 25. The predetermined operation is, for example, a flicking operation for the display region 25 in the X1 direction. The function selection screen 360 includes a plurality of sections 33 in which icons 22 for selecting functions to be executed by the multi-function peripheral 100 are disposed and is a screen for a user to select an icon 22.

The icons 22 are also displayed in the display region 25 in the item selection screen 300 illustrated in Fig. 4, but the icons 22 displayed in the display region 25 correspond to part of the icons 22 displayed on the function selection screen 360. As described above, the icons 22 displayed in the display region 25 correspond to the four main functions of the multi-function peripheral 100 in this example, and as the display region 25 is provided in the item selection screen 300, it is possible to operate the four main functions without switching to the function selection screen 360. An icon 22 displayed in the display region 25 is used, for example, in a case where a user selects a function that a user desires to cause the multi-function peripheral 100 to execute when a desired task that the user desires to cause the multi-function peripheral 100 to execute is not included in the priority list 1 and the history list 2.

Unlike the display region 25 of the item selection screen 300, the function selection screen 360 displays icons 22 corresponding to all functions executable by the multi-function peripheral 100. A user can select all the functions of the multi-function peripheral 100 through the function selection screen 360. The icons 22 displayed in the function selection screen 360 also include an icon 22 corresponding to a main function displayed in the display region 25 of the item selection screen 300, and a user can also select a main function selectable using an icon 22 displayed in the display region 25 in the function selection screen 360.

In the function selection screen 360, a section 33 is a region which is obtained by partitioning into predetermined sizes (that is, areas) and in which an icon 22 can be arranged. A section 33 has, for example, a rectangular shape. In the function selection screen 360 of this example, a plurality of sections 33 are provided in a matrix of three rows × four columns. In Fig. 6, a boundary line between the sections 33 is indicated by a broken line 39. The broken line 39 is illustrated for convenience of description and does not need to be actually displayed. It is a matter of course that a boundary line of each section 33 as indicated by the broken line 39 may be actually displayed.

Examples of the icon 22 include icons for selecting execution of functions such as e-mail transmission, scanning transmission, box storage, box operation, and digital camera printing, in addition to the above-described four main functions. The box storage is, for example, a function of uploading data to a network storage (called a cloud or the like) existing on a network such as the Internet. The box operation is, for example, an operation of downloading and deleting data uploaded to the network storage. The digital camera printing is, for example, a function of connecting a digital camera and the multi-function peripheral 100 so as to be communicable with each other in a wired or wireless manner, transmitting an image captured by the digital camera to the multi-function peripheral 100, and printing the image in the multi-function peripheral 100.

In the function selection screen 360, an explanatory text 19 indicating a content of a function to be executed by selection of an icon 22 is attached to the icon 22. In this example, the explanatory text 19 is not attached to the icon 22 illustrated in the display region 25 as illustrated in Fig. 4, but the explanatory text 19 may be attached to the display region 25.

For example, once the operation unit 122 detects an operation (specifically, a flicking operation or a tapping operation) for any of the icons 22, the operation receiving unit 143 receives an operation instruction for the detected operation.

In a case where the operation receiving unit 143 receives an operation instruction corresponding to any of the icons 22, the display control unit 142 causes the display unit 121 to display the execution screen 350 (see Fig. 5) for executing the function selected using the icon 22. As illustrated in Fig. 5, setting items for performing various settings and the execution button 10 for executing a function are displayed in the execution screen 350. Various settings are made by operating the setting items, and then a function corresponding to the execution screen 350 is executed by operating the execution button 10. The execution screen 350 illustrated in Fig. 5 is an example of a screen in a case where the icon 22 for the copy function is selected.

The display control unit 142 displays a shift button 34 and a switching button 37 in the function selection screen 360 with reference to the UI control data 132. In the present embodiment, the function selection screen 360 includes a plurality of pages, and the switching button 37 is a button for switching the pages of the function selection screen 360. The switching button 37 is arranged at one end of the function selection screen 360. In the present embodiment, as an example, the switching button 37 is arranged at the left end of the function selection screen 360 as illustrated in Fig. 6.

For example, once the operation unit 122 detects an operation (specifically, a flicking operation or a tapping operation) for the switching button 37, the operation receiving unit 143 receives an operation instruction for the detected operation. In a case where the operation receiving unit 143 receives the operation instruction, the display control unit 142 causes the display unit 121 to display the function selection screen 360 of the next page.

The shift button 34 is a button for shifting to a customization mode in which arrangement of an icon 22 can be changed in the function selection screen 360. The shift button 34 is arranged at one end of the function selection screen 360. In the present embodiment, as an example, the shift button 34 is arranged at the upper-right end of the function selection screen 360 as illustrated in Fig. 6.

For example, once the operation unit 122 detects an operation (specifically, a flicking operation or a tapping operation) for the shift button 34, the operation receiving unit 143 receives an operation instruction for the detected operation. In a case where the operation receiving unit 143 receives the operation instruction, the display control unit 142 shifts to the customization mode. In the customization mode, it is possible to delete an icon 22 displayed in the function selection screen 360 and move and add an icon 22 to a section 33 (hereinafter, referred to as an empty section 32) in which an icon 22 is not arranged. In other words, the change in arrangement of an icon 22 is a concept including movement, deletion, and addition of an icon 22.

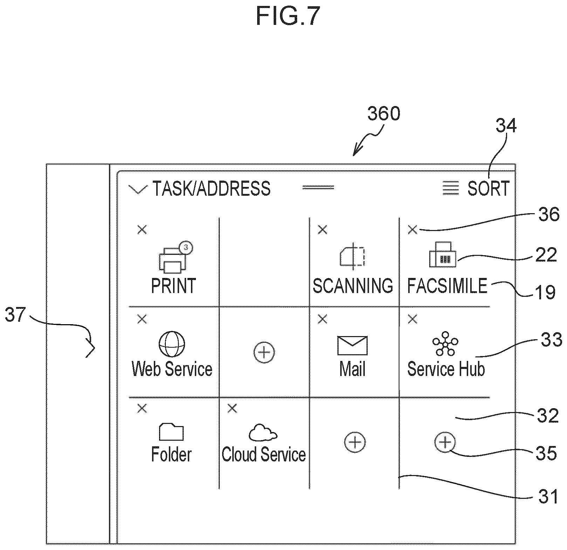

Fig. 7 is an example of the function selection screen 360 in a state of shifting to the customization mode. As illustrated in Fig. 7, in the customization mode, the display control unit 142 displays a guide frame 31, a list display button 35, and a delete button 36 in the function selection screen 360 with reference to the UI control data 132.

The guide frame 31 is a frame indicating a section 33 in which an icon 22 is arranged and indicates a boundary between the sections 33. As illustrated in Fig. 7, the guide frame 31 is indicated by a solid line as an example. In the case of displaying a boundary line of the sections 33 in the function selection screen 360 (see Fig. 6) in a normal mode before shifting to the customization mode, the display control unit 142 may display the guide frame 31 in the function selection screen 360 in the customization mode in Fig. 7 so as to be more conspicuous than the boundary line in the normal mode.

The list display button 35 is a button for displaying the icon list 21 of the icons 22, each of which is arrangeable in an empty section 32, the button being arranged in the empty section 32. As described above, the list display button 35 is arranged in an empty section 32 and thus functions as a mark indicating that a section 33 is an empty section 32 in which no icon 22 is arranged. The list display button 35 is indicated by "+" in each drawing.

The delete button 36 is arranged for each section 33 in which an icon 22 is arranged, and is a button for deleting an icon 22. In other words, the delete button 36 is a cancel button for canceling arrangement of an icon 22 arranged in a section 33. As described above, the delete button 36 is arranged in a section 33 in which an icon 22 is arranged. Therefore, the delete button 36 also functions as a mark indicating that an icon 22 is arranged in the section 33. The delete button 36 is indicated by "×" in each drawing.

Here, as illustrated in Fig. 3, screen data of the UI control data 132 includes information 17 regarding a section 33 (hereinafter referred to as "section information 17") and information 18 regarding an icon 22 that is arrangeable in a section 33 (hereinafter referred to as "icon information 18"). The section information 17 includes information indicating the position of a section 33 and the range of each section 33 in the function selection screen 360.

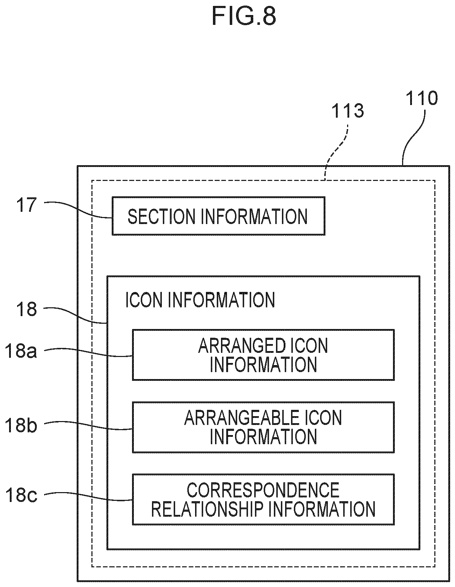

As illustrated in Fig. 8, the icon information 18 includes arranged icon information 18a of an icon 22 arranged in a section 33, arrangeable icon information 18b of an icon 22 that is not arranged in a section 33, and correspondence relationship information 18c indicating a correspondence relationship between an icon 22 arranged in a section 33 and the section 33. The correspondence relationship information 18c is information indicating with which section 33 an icon 22 is associated. That is, the correspondence relationship information 18c is information indicating in which section 33 an icon 22 is arranged.

The arranged icon information 18a is list information of the icons 22 currently arranged in the sections 33. The arranged icon information 18a can also be referred to as displayed icon information in the sense of information of an icon 22 that is being displayed in the function selection screen 360. The arrangeable icon information 18b is list information of icons 22 that are arrangeable in the sections 33. The arrangeable icon information 18b may include only information of an unarranged icon that is not arranged in a section 33, or may include information of all arrangeable icons including arranged icons. The arrangeable icon information 18b can also be referred to as displayable icon information in the sense of information of an icon 22 that can be displayed in the function selection screen 360.

Therefore, it can be said that the storage device 113 functions as a section information recording unit in which the section information 17 is recorded and an icon information recording unit in which the icon information 18 is recorded. The storage device 113 records the arranged icon information 18a (also referred to as the displayed icon information), and functions as a displayed icon recording unit. The storage device 113 functions as a displayable icon recording unit in which the arrangeable icon information 18a (also referred to as the displayable icon information) is recorded. The storage device 113 also functions as a correspondence relationship recording unit in which the correspondence relationship information 18c is recorded.

### (Addition of Icon)

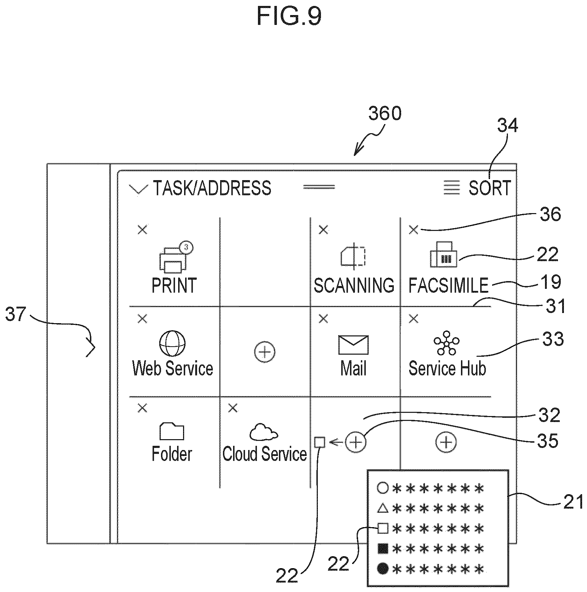

For example, once the operation unit 122 detects an operation (specifically, a flicking operation or a tapping operation) for the list display button 35, the operation receiving unit 143 receives an operation instruction for the detected operation. In a case where the operation receiving unit 143 receives the operation instruction, the display control unit 142 generates the icon list 21 as illustrated in Fig. 9 with reference to the arrangeable icon information 18b of the icon information 18.

As illustrated in Fig. 9, specifically, when generating the icon list 21, the display control unit 142 generates the icon list 21 by arranging icons 22 in order based on an arrangement order of the icons 22 included in the arrangeable icon information 18b. The display control unit 142 displays the icon list 21 in the function selection screen 360 in a scrollable manner. The icon list 21 is a list of icons 22, each of which is arrangeable in an empty section 32 for which the list display button 35 has been operated.

Once the operation unit 122 detects a selection operation (specifically, any of a flicking operation, a tapping operation, and an operation of dragging to an empty section 32) for an icon 22 of the icon list 21, the operation receiving unit 143 receives an operation instruction for the selection operation. In a case where the operation receiving unit 143 receives the operation instruction, the display control unit 142 arranges the selected icon 22 in the empty section 32 and displays the icon 22 in the empty section 32. As the icon 22 is arranged, the empty section 32 is updated to a section 33 in which an icon 22 is arranged.

As an icon 22 is arranged in an empty section 32, the icons 22 arranged in the sections 33 and the unarranged icons are changed, and thus, the arranged icon information 18a and the arrangeable icon information 18b are updated. As an icon 22 is arranged in an empty section 32, a correspondence relationship between an icon 22 and a section 33 is changed, and thus, the correspondence relationship information 18c is updated.

Since the list display button 35 is arranged in each empty section 32, an operation performed on the list display button 35 can also be said to be a selection operation for selecting an empty section 32 in which the list display button 35 is arranged. That is, in the present embodiment, the display control unit 142 displays the icon list 21 that is a list of icons 22, each of which is arrangeable in an empty section 32, in a case where the selection operation of selecting an empty section 32 has been performed in the customization mode, and arranges, in a case where the selection operation of selecting an icon 22 from the icon list 21 has been performed, the selected icon 22 in the empty section 32.

A configuration, in which the icon list 21 displays all icons, each of which is arrangeable in an empty section 32, including arranged icons already arranged in the sections 33, is also possible. In this configuration, in a case where an arranged icon is selected from the icon list 21, for example, the selected arranged icon is arranged in an empty section 32, and the arranged icon is deleted from a section 33 in which the arranged icon has been arranged. In this configuration, the arrangeable icon information 18b includes information of all icons, each of which is arrangeable in an empty section 32, including arranged icons.

### (Movement of Icon)

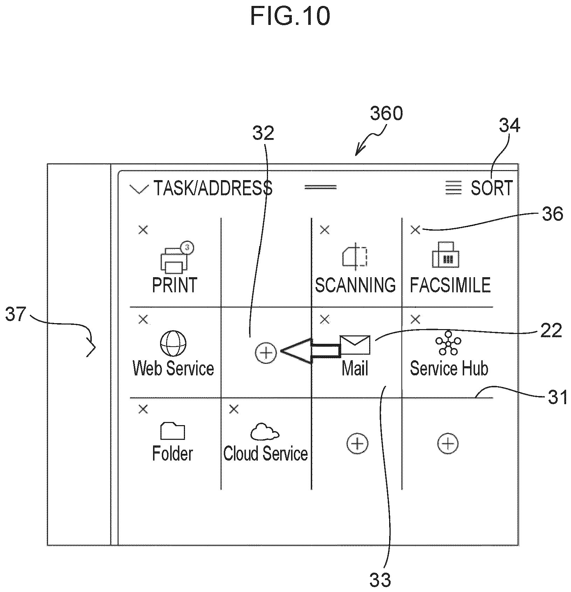

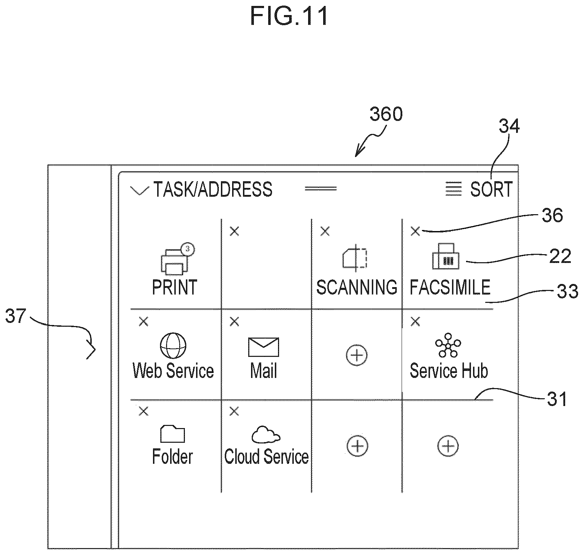

Once the operation unit 122 detects a moving operation of moving an icon 22 displayed in a section 33 to an empty section 32 (specifically, an operation of dragging to an empty section 32) (see Fig. 10), the operation receiving unit 143 receives an operation instruction for the moving operation. In a case where the operation receiving unit 143 receives the operation instruction, the display control unit 142 arranges the icon 22 for which the moving operation has been performed in the empty section 32 and displays the icon 22 in the empty section 32 as illustrated in Fig. 11. As the icon 22 is arranged, the empty section 32 is updated to a section 33 in which an icon 22 is arranged.

Specifically, the operation receiving unit 143 receives position information (coordinate information) of the icon 22 to be moved. The display control unit 142 determines that the icon 22 has been moved to the empty section 32 in a case where the amount of movement of the icon 22 exceeds a predetermined threshold based on the position information and the section information 17 received by the operation receiving unit 143, and displays the icon 22 in the empty section 32. More specifically, the display control unit 142 determines whether or not the icon 22 has been moved to a position where half or more of the area of the icon 22 is within the empty section 32 based on the position information and the section information 17 received by the operation receiving unit 143. In a case where an operation of releasing a finger from the icon 22 is performed after the icon 22 is moved to the position where half or more of the area of the icon 22 is within the empty section 32, the display control unit 142 determines that the icon 22 has been moved to the empty section 32 and displays the icon 22 in the empty section 32. Therefore, the display control unit 142 also functions as a position information receiving unit that receives the position information of an icon 22, and also functions as a calculation unit that compares the position information with the section information 17.

As an icon 22 is moved to an empty section 32, a correspondence relationship between an icon 22 and a section 33 is changed, and thus, the correspondence relationship information 18c is updated. In a case where the moving operation is performed on the icon 22, when the operation of releasing a finger from the icon 22 (that is, the image) is performed in a state in which half or more of the area of the icon 22 subjected to the moving operation is not within the empty section 32, the display control unit 142 does not change the position of the icon 22 subjected to the moving operation. Therefore, a state in which the icon 22 is arranged in the section 33 in which the icon 22 has been arranged at the time of starting the moving operation is maintained.

Therefore, for example, in a case where the moving operation of moving an icon 22 to a section 33 in which an icon 22 is arranged is performed, the moving operation for the icon 22 becomes invalid, and the position of the icon 22 arranged in the section 33 as the movement destination is not changed. Even in a case where an icon 22 subjected to the moving operation passes through a section 33 in which an icon 22 is arranged, the position of the icon 22 is not changed. That is, the position of the icon 22 that is not a target of the moving operation is not changed. In the present embodiment, the position of an icon 22 other than an icon 22 that is a target of the moving operation is not affected by the moving operation, and thus, for example, the position of the icon 22 is not changed, and the icon 22 is not deleted or hidden.

In a case where the moving operation of moving an icon 22 to a section 33 in which another icon 22 is already arranged is performed, the processing may be performed assuming that an operation of moving an icon 22 to a section 33 and a deleting operation of deleting an icon 22 originally arranged in the section 33 before the movement are performed. In this case, a selection button for selecting whether or not to permit such processing may be displayed, and the processing may be performed in a case where the selection button is operated. An icon sorting work can be speeded up by performing such processing.

### (Deletion of Icon)

Once the operation unit 122 detects an operation (specifically, a flicking operation or a tapping operation) for the delete button 36, the operation receiving unit 143 receives an operation instruction for the detected operation. In a case where the operation receiving unit 143 receives the operation instruction, the display control unit 142 deletes an icon 22 arranged in a section 33 for which the delete button 36 has been operated, and hides the icon 22 in the section 33. That is, the display control unit 142 cancels arrangement of an icon 22 in a section 33 by operating the delete button 36. As a result, a section 33 from which an icon 33 has been deleted becomes an empty section 32. In this case, in the present embodiment, the display control unit 142 displays the list display button 35 in a section 33 from which an icon 22 has been deleted, and indicates that the section 33 is an empty section 32.

As an icon 22 is deleted from a section 33, the icons 22 arranged in the sections 33 and the unarranged icons are changed, and thus, the arranged icon information 18a and the arrangeable icon information 18b are updated. As an icon 22 is deleted from a section 33, a correspondence relationship between an icon 22 and a section 33 is changed, and thus, the correspondence relationship information 18c is updated.

For example, in a case where a user does not want to delete an icon 22 displayed on the first page of the function selection screen 360 although its use frequency is not high, the user can change a page on which the icon 22 is displayed from the first page to the next page. For example, the icon 22 displayed on the first page is deleted by the deleting operation, the next page is opened, and the icon 22 deleted from the first page is added to the next page by the adding operation. As a result, an empty section 32 can be provided on the first page, and an icon 22 having a relatively low use frequency can be displayed on the next page.

With this rearrangement, only an icon 22 with a high use frequency is displayed on the first page. Therefore, the visibility of an icon 22 with a high use frequency is enhanced, and an icon 22 with a low use frequency is displayed on the next page, so that it is possible to quickly access an icon 22 with a low use frequency as compared with a case where an icon with a low use frequency is deleted.

The arrangement of the icons 22 in the plurality of sections 33 can be set for each user in the function selection screen 360. In this case, for example, user authentication is performed via the operation unit 122. The icons 22 are displayed in the sections 33 in the arrangement set for each authenticated user in the function selection screen 360. In this case, setting information regarding the arrangement of the icons 22 is recorded in the icon information 18 in association with each user.

### (Specific Configuration of Display Region 25)

Here, the display region 25 displayed in the item selection screen 300 (see Fig. 4) corresponds to a display region of the function selection screen 360 that is reduced in size. The item list 4 and the display region 25 are simultaneously displayed in the item selection screen 300. That is, the display control unit 142 reduces the size of the display region of the function selection screen 360 and simultaneously displays the display region 25 reduced in size and the item list 4. The display control unit 142 displays, in the display region 25, some of the plurality of icons 22 arranged in the respective sections 31 in the function selection screen 360.

As described above, the display control unit 142 displays, as the icons 22, the icon 22a for selecting the copy function, the icon 22b for selecting the scanning function, the icon 22c for selecting the printing function, and the icon 22d for selecting the facsimile function in the item selection screen 300 together with the item list 4, with reference to the UI control data 132. As a result, in the present embodiment, each of the copy function, the scanning function, the printing function, and the facsimile function, which are four main functions of the multi-function peripheral 100, can be executed in the item selection screen 300.

The icons 22a, 22b, 22c, and 22d are displayed while being superimposed on the lower end of the item list 4 (specifically, the history list 2). As described above, in the item selection screen 300, the item list 4 and the display region 25 including the icons 22 are simultaneously displayed in the item selection screen 300.

### (Operation of Present Embodiment)

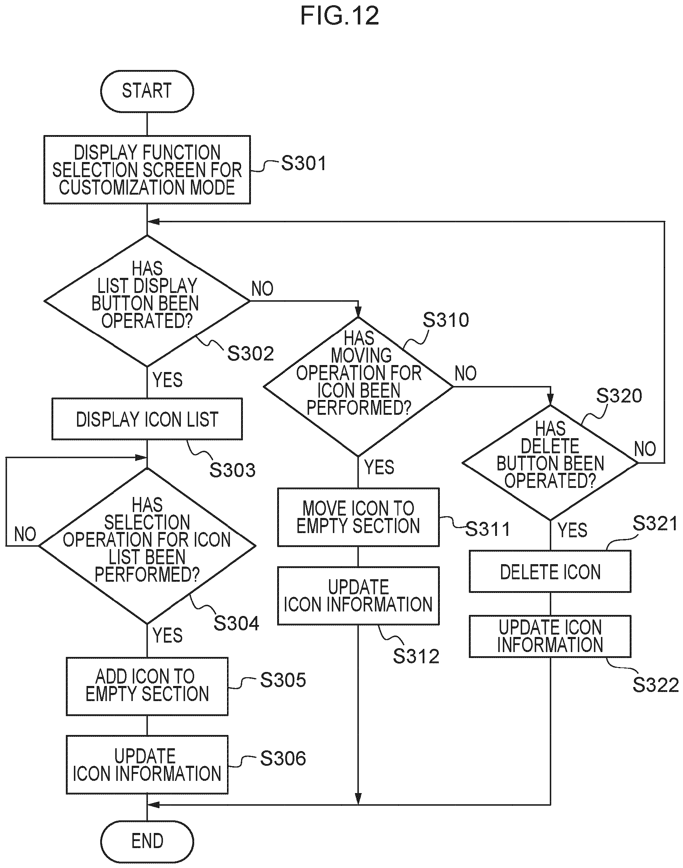

Next, an example of the operation according to the present embodiment will be described. Here, display control processing in which the control device 110 controls display of the function selection screen 360 in the customization mode will be described as the operation according to the present embodiment. Fig. 12 is a flowchart illustrating a flow of the display control processing in the customization mode in the function selection screen 360 executed by the control device 110.

Once the multi-function peripheral 100 is activated by receiving power, the CPU 111 executes the control program 130 read from the storage device 113. As a result, the CPU 111 functions as the UI control unit 141 and the function control unit 144, and starts the control processing. As an example, the UI control unit 141 causes the display unit 121 of the touch panel display 123 to display the item selection screen 300 (see Fig. 4) as the top screen. As a predetermined operation for the display region 25 in the item selection screen 300 is performed, the function selection screen 360 is displayed. The predetermined operation is, for example, a flicking operation for the display region 25 in the X1 direction. As an operation (specifically, a flicking operation or a tapping operation) for the shift button 34 is performed in the function selection screen 360, the display control processing in the customization mode in the function selection screen 360 is started.

As illustrated in Fig. 12, the UI control unit 141 causes the display unit 121 of the touch panel display 123 to display the function selection screen 360 (see Fig. 7) for the customization mode as an example (Step S301). The guide frame 31, the list display button 35, and the delete button 36 are displayed in the function selection screen 360 for the customization mode.

The UI control unit 141 waits for input of a touch operation for the function selection screen 360 for the customization mode displayed on the display unit 121. First, in Step S302, the UI control unit 141 determines whether or not an operation (specifically, a flicking operation or a tapping operation) for the list display button 35 displayed in the empty section 32 in the function selection screen 360 for the customization mode has been performed. Since the list display button 35 is arranged in each empty section 32, an operation performed on the list display button 35 can also be said to be a selection operation for selecting an empty section 32 in which the list display button 35 is arranged.

In a case where the operation for the list display button 35 has been performed (Step S302: YES), the UI control unit 141 proceeds to Step S303. On the other hand, in a case where the operation for the list display button 35 displayed in the function selection screen 360 for the customization mode is not performed (Step S302: NO), the UI control unit 141 proceeds to Step S310.

In Step S303, the UI control unit 141 displays the icon list 21 in the function selection screen 360 in a scrollable manner as illustrated in Fig. 9. Next, the UI control unit 141 determines whether or not a selection operation (specifically, any one of a flicking operation, a tapping operation, and an operation of dragging to an empty section 32) for an icon 22 of the icon list 21 has been performed (Step S304).

In a case where the selection operation for an icon 22 of the icon list 21 has been performed (Step S304: YES), the UI control unit 141 arranges the selected icon 22 in the empty section 32 and displays the icon 22 (Step S305). In this manner, the icon 22 selected from the icon list 21 is added to the empty section 32. Next, the UI control unit 141 updates the icon information 18 (specifically, the arranged icon information 18a, the arrangeable icon information 18b, and the correspondence relationship information 18c) in response to the addition of the icon 22 to the empty section 32 (Step S306). In a case where the selection operation for an icon 22 of the icon list 21 is not performed (Step S304: NO), the UI control unit 141 repeats Step S304 until the selection operation for an icon 22 of the icon list 21 is performed.

In Step S310, the UI control unit 141 determines whether or not a moving operation (specifically, an operation of dragging to an empty section 32) of moving an icon 22 displayed in a section 33 to the empty section 32 has been performed. In a case where the moving operation has been performed (Step S310: YES), the UI control unit 141 arranges the icon 22 for which the moving operation has been performed in the empty section 32 and displays the icon 22 (Step S311). In this manner, an icon 22 displayed in a section 33 is moved to an empty section 32. Next, the UI control unit 141 updates the icon information 18 (specifically, the arranged icon information 18a, the arrangeable icon information 18b, and the correspondence relationship information 18c) in response to the movement of the icon 22 to the empty section 32 (Step S312). In a case where the moving operation is not performed (Step S310: NO), the UI control unit 141 proceeds to Step S320.

In Step S320, the UI control unit 141 determines whether or not an operation (specifically, a flicking operation or a tapping operation) for the delete button 36 has been performed. In a case where the operation for the delete button 36 has been performed (Step S320: YES), the UI control unit 141 deletes an icon 22 arranged in a section 33 for which the delete button 36 has been operated, and hides the icon 22 in the section 33 (Step S321). That is, the UI control unit 141 cancels arrangement of the icon 22 in the section 33 for which the delete button 36 has been operated.

Next, the UI control unit 141 updates the icon information 18 (specifically, the arranged icon information 18a, the arrangeable icon information 18b, and the correspondence relationship information 18c) in response to the deletion of the icon 22 (Step S322). In a case where the operation for the delete button 36 is not performed (Step S320: NO), the UI control unit 141 proceeds to Step S302.

In a case where an operation of canceling the customization mode has been performed, the UI control unit 141 ends the display control processing in the customization mode regardless of which step is being executed. Once the display control processing in the customization mode ends, the UI control unit 141 switches the function selection screen 360 (see Fig. 7) for the customization mode to the normal function selection screen 360 (see Fig. 6).

### (Operation and Effect of Present Embodiment)

As described above, in the present embodiment, in a case where the operation for the list display button 35 arranged in the empty section 32 has been performed in the customization mode (Step S302: YES), the UI control unit 141 displays the icon list 21 that is a list of icons 22, each of which is arrangeable in an empty section 32, and in a case where an icon 22 has been selected from the icon list 21 (Step S304: YES), the UI control unit 141 arranges the icon 22a in the empty section 32 (see Fig. 9).

As described above, in the present embodiment, the icon list 21 that is a list of icons 22, each of which is arrangeable in an empty section 32, can be displayed, and an icon 22 to be added to an empty section 32 can be selected from the icon list 21. Therefore, it is easy to select an icon 22 to be added to an empty section 32.

Since the selection operation for an icon 22 of the icon list 21 is an operation performed regardless of an icon 22 that is already arranged in a section 33, the position of an icon 22 that is already arranged in a section 33 is not changed due to addition of an icon 22.

Therefore, in the present embodiment, in the function selection screen 360, it is easy to select an icon 22 to be added to an empty section 32, and the icon 22 can be added to the empty section 32 without changing the position of an icon 22 that is already arranged in a section 33.

In the present embodiment, the list display button 35 for displaying the icon list 21 that is a list of icons 22, each of which is arrangeable in an empty section 32, is displayed in an empty section 32. Therefore, the list display button 35 serves as a mark indicating the empty section 32, and the empty section 32 can be easily recognized.

In the present embodiment, the UI control unit 141 performs an operation for the delete button 36 to cancel arrangement of an icon 22 in a section 33 for which the delete button 36 has been operated. This increases the degree of freedom in changing arrangement of an icon 22.

In the present embodiment, the guide frame 31, which is a frame indicating a section 33 in which an icon 22 is arranged, is displayed in the function selection screen 360 in the customization mode. The boundary between the sections 33 can be visually recognized, and an icon 22 can be moved to an empty section 32 by using the guide frame 31 as a mark.

In the present embodiment, the display region of the function selection screen 360 is reduced in size, and the display region 25 obtained by the size reduction and the item list 4 are simultaneously displayed in the item selection screen 300. Therefore, the selection operation for an icon 22 displayed in the display region 25 and the selection operation for a task item 301 in the item list 4 can be performed in one screen.

In the present embodiment, some of the plurality of icons 22 arranged in the respective sections 31 in the function selection screen 360 are displayed in the display region 25. Therefore, the size of the display region 25 in the item selection screen 300 can be reduced as compared with a case where all of the plurality of icons 22 are displayed.

### (Modified Example)

In the present embodiment, the list display button 35 is displayed in an empty section 32 of the function selection screen 360 in the customization mode, but the technology of the disclosure is not limited thereto. For example, the list display button 35 does not have to be displayed in an empty section 32. In this case, for example, a single-color solid image may be displayed in an empty section 32, and the icon list 21 may be displayed by a selection operation for the solid image.

In the present embodiment, the delete button 36 is displayed for each section 33 in which an icon 22 is arranged in the function selection screen 360 in the customization mode, but the technology of the disclosure is not limited thereto. For example, the delete button 36 does not have to be displayed for each section 33 in which an icon 22 is arranged. In this case, an icon 22 arranged in a section 33 may be able to be deleted by a predetermined operation after the icon 22 is selected.

The guide frame 31 is displayed in the function selection screen 360 in the customization mode in the present embodiment, but the guide frame 31 does not have to be displayed.

The item selection screen 300 (see Fig. 4) has the display region 25 in which an icon 22 is displayed in the present embodiment, but does not have to have the display region 25. In the present embodiment, the display region 25 is displayed by reducing the display region of the function selection screen 360 in size, but the technology of the disclosure is not limited thereto. For example, a part of the display region of the function selection screen 360 may be displayed in the actual size as the display region 25.

In the above-described embodiments, for example, as a hardware structure of a processing unit that executes various processings such as the UI control unit 141, the display control unit 142, the operation receiving unit 143, and the function control unit 144, various processors described below can be used. Examples of the various processors include, in addition to the CPU 111 which is a general-purpose processor that functions as various processing units by executing software (program), a programmable logic device (PLD) in which a circuit configuration can be changed after manufacturing, such as a field programmable gate array (FPGA) and a dedicated circuitry which is a processor having a dedicated circuit configuration designed for executing specific processing, such as an application specific integrated circuit (ASIC).

The various processings may be executed by one of these various processors, or may be executed by a combination of two or more processors of the same type or different types (for example, a plurality of FPGAs and a combination of a CPU and an FPGA). A plurality of processing units may be implemented by one processor. As an example in which a plurality of processing units are implemented by one processor, a processor that implements a function of the entire system including a plurality of processing units with one integrated circuit (IC) chip, such as a system on chip (SoC), may be used.

As described above, the various processing units are implemented using one or more of the various processors as a hardware structure.

More specifically, a circuitry obtained by combining circuit elements such as semiconductor elements can be used as the hardware structure of these various processors.

The technology of the disclosure is also applicable to a computer-readable storage medium (a universal serial bus (USB) memory, a digital versatile disc (DVD)-read only memory (ROM), or the like) that non-transiently stores a control program of the control device, in addition to the control program of the control device.

The present invention is not limited to the above-described embodiments, and various modifications, changes, and improvements can be made without departing from the gist of the disclosure. For example, the above-described modified examples may be configured by combining a plurality of embodiments, if appropriate.

In the present embodiment, the multi-function peripheral 100 is used as an example of the information apparatus, but the technology of the disclosure is not limited thereto. Examples of the information apparatus may include a telephone line apparatus such as a mobile phone or a facsimile machine, a copier or a printer having no communication function, or the like may be used, or an image forming device other than a multi-function peripheral may be used as an example of the information apparatus.

The disclosure of Japanese Patent Application No. 2020-031203 filed on February 27, 2020 is incorporated herein by reference in its entirety. All documents, patent applications, and technical standards mentioned herein are incorporated herein by reference to the same extent as if each individual document, patent application, and technical standard were specifically and individually stated.

### INDUSTRIAL APPLICABILITY

The technology of the disclosure is capable of easily and quickly changing arrangement of an image indicating a function in a function selection screen of an information apparatus, and is capable of adding an image to an empty section without changing the position of an image that is already arranged in a section, and has industrial applicability.

## Claims

1. A control device comprising:
a display control unit that controls display of a function selection screen comprising a plurality of sections in which images for selection of functions to be executed by an information apparatus are arranged,
wherein, in a case in which a selection operation of selecting an empty section in which no image is arranged has been performed in a customization mode in which image arrangement is changeable, the display control unit causes display of a list of images, each of which is arrangeable in the empty section, and, in a case in which a selection operation of selecting an image from the list has been performed, arranges a selected image in the empty section.

2. The control device according to claim 1, wherein the display control unit causes display, in the empty section, of a list display button for displaying the list of images, each of which is arrangeable in the empty section.

3. The control device according to claim 1 or 2, wherein the display control unit causes display of a cancel button for canceling arrangement of an image arranged in the section in the customization mode, and the arrangement of the image in the section is canceled by operating the cancel button.

4. The control device according to any one of claims 1 to 3, wherein the display control unit causes display of a guide frame indicating a section in which an image is arranged in the customization mode.

5. The control device according to any one of claims 1 to 4, wherein the display control unit causes a reduction in a size of a display region of the image and simultaneously causes display of both the display region reduced in size and a display region other than the display region reduced in size.

6. The control device according to claim 5, wherein the display control unit causes display of some of a plurality of images arranged in respective sections in the display region reduced in size.

7. A control program for causing a computer to function as a control device comprising a display control unit that controls display of a function selection screen comprising a plurality of sections in which images for selection of functions to be executed by an information apparatus are arranged, wherein, in a case in which a selection operation of selecting an empty section in which no image is arranged has been performed in a customization mode in which image arrangement is changeable, the display control unit causes display of a list of images, each of which is arrangeable in the empty section, and, in a case in which a selection operation of selecting an image from the list has been performed, arranges a selected image in the empty section.
